# EUROPÄISCHE PATENTSCHRIFT

(11) **EP 1 417 108 B1**
(45) Veröffentlichungstag und Bekanntmachung des Hinweises auf die Patenterteilung: **12.07.2006**
(21) Anmeldenummer: 02772156.2
(22) Anmeldetag: 15.08.2002
(51) Int. Cl.: B60G 17/015, B60G 21/00, B60G 21/055, B60G 5/04, B62D 9/00

(54) **VERFAHREN ZU BEEINFLUSSUNG DES WANKVERHALTENS VON KRAFTFAHRZEUGEN**
METHOD FOR INFLUENCING THE ROLL BEHAVIOR OF MOTOR VEHICLES
PROCEDE POUR INFLUER SUR LA TENUE AU ROULIS D'AUTOMOBILES

(30) Priorität: 18.08.2001 DE 10140604
(43) Veröffentlichungstag der Anmeldung: 12.05.2004
(73) Patentinhaber: DaimlerChrysler AG, 70567 Stuttgart (DE)
(72) Erfinder: ACKER, Bernd, 73733 Esslingen (DE); MEIER, Gerhard, 73249 Wernau (DE); SCHULZ, Walter, 70378 Stuttgart (DE)
(86) Internationale Anmeldenummer: PCT/EP2002/009128
(87) Internationale Veröffentlichungsnummer: WO 2003/016080

(56) Entgegenhaltungen:
- DE-A- 19 647 300
- DE-C- 19 836 674
- US-A- 4 984 163
- US-A- 5 408 411
- SENGER A: "NEUES ABC DER FAHRWERKTECHNIK" TECHNISCHE RUNDSCHAU, HALLWAG VERLAG. BERN, CH, Bd. 91, Nr. 11, 4. Juni 1999 (1999-06-04), Seiten 78-79, XP000873118 ISSN: 1023-0823

## Beschreibung

Die Erfindung betrifft ein Verfahren zur Beeinflussung des Wankverhaltens von Kraftfahrzeugen mit mindestens drei Rädern. Zwischen den auf die Räder wirkenden Stabilisatoren und dem Fahrzeugaufbau oder zwischen den Stabilisatorabschnitten zweier Räder einer Achse ist jeweils mindestens ein Stellglied angeordnet. Am Kraftfahrzeug wird der Lenkradwinkel, die Fahrgeschwindigkeit, die Fahrzeugquerbeschleunigung und am Antriebsmotor mindestens die Motordrehzahl gemessen. Aus dem Lenkradwinkel und der Fahrggeschwindigkeit wird die theoretische Fahrzeugquerbeschleunigung berechnet. Aus der gemessenen oder der berechneten Querbeschleunigung, der Motordrehzahl und einer der Gaspedalstellung proportionalen Größe wird die Wankmomentenverteilung zwischen den Fahrzeugachsen errechnet. Aus den Daten der Querbeschleunigung und der Wankmomentenverteilung werden die Stellgliedkräfte ermittelt. Auf der Basis der Daten der jeweiligen Stellgliedkräfte wird die Energiezufuhr zu den entsprechenden Stellgliedern gesteuert.

Ein derartiges Verfahren ist aus einem Vortrag bekannt: "Aktive Roll-Stabilisation - eine kostengünstige Lösung zur aktiven Fahrwerksregelung" gehalten im Haus der Technik e.V., Essen 1993; Veranstaltungsnummer T306330563. Dort wird ein aktives Fahrwerksystem beschrieben, das eine Verbesserung der Fahrzeugquerdynamik zur Aufgabe hat. Das Verfahren befaßt sich mit dem Reduzieren der Fahrzeugaufbaubewegung unter dem Einfluß einer am Schwerpunkt angreifenden Querkraft. Es benötigt am Kraftfahrzeug für jede Fahrzeugachse einen zweigeteilten Stabilisator. In der Teilungsfuge des Stabilisators ist ein hydraulisches Stellglied angeordnet, das die beiden Stabilisatorhälften gegeneinander tordieren kann. Das in den Stabilisator eingeleitete Drehmoment wird über die Stabilisatorschenkel an den jeweiligen Radträgern übertragen. Die Reaktionskräfte werden am Fahrzeugaufbau abgestützt. Dadurch wirkt auf den Fahrzeugaufbau ein Drehmoment um die Wankachse. Mit diesem Drehmoment kann ein durch die Fahrzeugquerkraft verursachtes Wankmoment kompensiert werden.

Zur Steuerung der Stellglieder werden zum einen der Lenkradwinkel und die Fahrgeschwindigkeit erfaßt, um daraus die auf den Fahrzeugaufbau wirkende Querbeschleunigung zu berechnen. Die Querbeschleunigung kann auch direkt gemessen werden. Zum anderen werden die Drehzahl und der Drosselklappenwinkel des das Kraftfahrzeug antreibenden Verbrennungsmotors erfaßt. U.a. aus diesen Meßwerten wird die Zugkraftänderung bzw. die Wankmomentenverteilung ermittelt. Die Querbeschleunigung und die Wankmomentenverteilung bestimmen die Kräfte die in den Stellgliedern an den verschiedenen Fahrzeugachsen zum Einsatz kommen.

Aus der DE 198 36 674 C1 ist ein Verfahren zur Beeinflussung des Wankverhaltens bekannt. Hierbei werden über den Schwerpunkt angreifende Querkräfte über einen zweigeteilten Stabilisator und einem in dieser Teilung befindlichen Stellglied gegeneinander tordiert. Die über die Stabilisatorhälften eingeleiteten Drehmomente werden über mit den Stabilisatorhälften fest verbundenen Kragarmen auf die entsprechenden Räder übertragen um somit Wankbewegungen des Fahrzeugaufbaus abzustützen.

Der vorliegenden Erfindung liegt daher das Problem zugrunde, das Verfahren zur Beeinflussung des Wankverhaltens im Hinblick auf Genauigkeit und die Reaktionsgeschwindigkeit zu verbessern und universeller zu gestalten.

Das Problem wird mit den Merkmalen des Hauptanspruchs gelöst. Bei dem neuen Verfahren werden mindestens an zwei Rädern einer Achse die Raddrehzahlen gemessen und aus den Raddrehzahlen wird die für die Berechnung der Querbeschleunigung notwendige Fahrgeschwindigkeit ermittelt. Die Querbeschleunigung wird im folgenden als theoretische Querbeschleunigung bezeichnet. Am Antriebsmotor wird das Motormoment gemessen oder aus motortypischen Meßdaten und/oder Kennfeldern hergeleitet. Die theoretische Querbeschleunigung wird mit einem Schwellwert verglichen, wobei bis zum Erreichen des Schwellwerts die Stellglieder nicht aktiv sind, während bei einem Überschreiten des Schwellwertes die Differenz zwischen der theoretischen und der gemessenen Querbeschleunigung ermittelt wird. Anschließend wird die Differenz mit einem Differenzschwellwert verglichen, wobei bis zum Erreichen dieses Differenzschwellwertes die berechnete Querbeschleunigung als aktuelle Querbeschleunigung verwendet wird, während bei einem Überschreiten des Differenzschwellwertes die gemessene Querbeschleunigung als aktuelle Querbeschleunigung definiert wird. Ferner wird für einen vorgegebenen, regulären Fahrzustandsbereich in Abhängigkeit von den Drehzahlen der Fahrzeugräder oder der mittleren Drehzahl der Radpaare einzelner Achsen, der aktuellen Querbeschleunigung und der Änderung des Antriebsmoments eine theoretische Wankmomentenverteilung ermittelt. Die Drehzahlen der Achsen oder Räder, die aktuelle Querbeschleunigung und die Antriebsmomentenänderung werden jeweils mit entsprechenden Schwellwerten verglichen, wobei bis zum Erreichen der Schwellwerte die theoretische Wankmomentenverteilung als aktuelle Wankmomentenverteilung verwendet wird, während beim Überschreiten von mindestens zwei der genannten Schwellwerte eine neue, aktuelle Wankmomentenverteilung errechnet wird. Abschließend werden die Stellkräfte der Stellglieder als Funktionen der aktuellen Querbeschleunigung und der aktuellen Wankmomentenverteilung errechnet, in Signale zur Ansteuerung der Stellglieder umgesetzt und die Stellglieder mit Energie zur Erzeugung der ermittelten Kräfte versorgt.

Mit dem Verfahren wird ein Wanken bei Kurvenfahrten weitgehend verhindert. Es ermöglicht durch eine variable Wankmomentenverteilung beispielsweise zwischen einer Vorder- und Hinterachse eine positive Beeinflussung des Fahrverhaltens. Dazu werden die Stabilisatoren an der Vorder- und der Hinterachse mit Hilfe von geeigneten Stellgliedern verspannt. Als Stellglieder können beispielsweise die aus der DE 196 47 300.4 bekannten Hydromotoren verwendet werden. Alternativ können auch pneumatische oder elektromechanische Stellglieder verwendet werden.

Ein Stellglied kann zwischen den beiden Hälften eines U-Stabilisators angeordnet sein. Ist das Stellglied ein Schwenkmotor, so ist z.B. die rechte Stabilisatorhälfte am Stator angeflanscht, während die linke Hälfte Teil des Rotors ist. Beide Hälften können hydraulisch gegeneinander verdreht und gesperrt werden. Eine weitgehende Entkopplung der Stabilisatorhälften ist möglich.

Die Stellglieder können auch zwischen jeder Stabilisatorhälfte und dem Fahrzeugaufbau angeordnet sein, so daß die Kopplung der Stabilisatorhälften hydraulisch, pneumatisch oder elektromechanisch nachgebildet wird.

Bei einer Kurvenfahrt wird zumindest annähernd proportional zur Querbeschleunigung pro Achse eine Kraft bzw. ein Moment aufgebaut, die einer Wankbewegung des Fahrzeugaufbaus entgegenwirkt, so daß das Fahrzeug nur geringfügig wankt. Dazu wird aus mehreren Meßgrößen und deren Auswertung eine Wankmomentenverteilung berechnet. Die Meßgrößen werden immer nur teilweise ausgewertet und mit Schwellwerten verglichen bzw. auf ihre Plausibilität überprüft, um so beispielsweise verrauschte Meßgrößen durch vergleichbare, auf anderen Meßgrößen basierende Berechnungswerte zu ersetzen.

Die Wankmomentenverteilung kann zusätzlich über einen beispielsweise durch den Fahrer von Hand zu betätigenden Schalter beeinflußt werden, um dem Fahrzeug zumindest bereichsweise zwei verschiedene Fahrcharakteristiken zu verleihen. Durch diesen Schalter kann zwischen einem komfortablen und einem sportlichen Fahrverhalten gewählt werden. Bei einer sportlichen Einstellung reagiert das Kraftfahrzeug agiler. Es weist ein Fahrverhalten mit einer Übersteuertendenz auf. Im Gegensatz hierzu verhält sich das Fahrzeug bei einer komfortablen Einstellung mehr untersteuernd.

Bei Fahrzuständen im Grenzbereich neigen Fahrzeuge zum Schleudern bzw. zum Gieren. Ist dies der Fall, verliert mindestens eine Achse des Fahrzeugs ihre Seitenführungseigenschaften und rutscht in Richtung der Außenseite der befahrenen Kurve. Dieses Verhalten wird im allgemeinen Schleudern oder Gieren genannt. In derartigen Situationen sind Lastwechsel oder wechselseitiges Ein- und Ausfedern sehr gefährlich. Das Fahrzeug neigt durch diese an- und abschwellenden Belastungen zu einer aufschaukelnden Wankbewegung. Um auf diese Fahrzustände rechtzeitig reagieren zu können, wird die Giergeschwindigkeit des Fahrzeuges gemessen. Diese gemessene Giergeschwindigkeit wird anschließend mit einem auf das Fahrzeug abgestimmten Sollwert der Giergeschwindigkeit verglichen. Dieser Sollwert kann einer der Fahrsituation zugeordneten Kenngröße aus einem Kennfeld entsprechen. Wird nun dieser Sollwert inklusive eines zu berücksichtigenden Toleranzfeldes überschritten, wird dieser Wert zur Bestimmung einer Wankmomentenverteilung verwendet.

Um den Einsatz der Erfindung in Geländefahrzeugen zu ermöglichen, ist ähnlich dem Sport/Komfortschalter ein Schalter für Geländefahrbetrieb vorgesehen. Da bei Fahrten im Gelände bereits im Langsamfahrbetrieb, bedingt durch extreme Verwindungen sowie durch Ein- und Ausfedern große Wankbewegungen auftreten, wird hierbei für die spezielle Fahrsituation längs eines Hanges eine Hangkompensation berücksichtigt. Dabei wird ein aktueller Hangwinkel ermittelt und mit einem Sollhangwinkel verglichen. Bei Erreichen eines Schwellwertes, der sich aus dem Sollhangwinkel und vorgegebener Kennfeldtoleranzen zusammensetzt, wird bei aktivierten Schalter für Geländefahrbetrieb eine hierfür entsprechende Wankmomentenverteilung durch die zugehörige Aktivierung der Stellglieder bewirkt.

Zur Ermittlung des aktuellen Hangwinkels werden die Eingangsgrößen der Querbeschleunigung, des Wankwinkels und der aktuellen Federwege der Räder gemessen. Die aktuellen Federwege der Räder werden mit Sollfederwegen der Räder verglichen, wobei die Sollfederwege entsprechend der Abhängigkeit von Querbeschleunigung und Wankwinkel vorgegeben werden. Ergibt der Vergleich zwischen Sollhangwinkel und aktuellem Hangwinkel einen größeren Wert als eins, zumindest jedoch einen Wert gleich eins, wird eine neue Wankmomentenverteilung mit zugehöriger Aktivierung der Stellglied bewirkt.
Diese Wankmomentenverteilung berücksichtigt ebenso ein Wegrutschen oder Gieren bei Längsfahrbetrieb am Hang. Dies ist von besonderer Wichtigkeit, da hierdurch ein Kippen des Fahrzeuges vermieden werden kann.

Eine zusätzliche Gefährdung kann durch plötzliches Anfahr- und Bremsnicken hervorgerufen werden. Da bei Längsfahrbetrieb am Hang und einem gleichzeitigen Lenken sowie ruckartigem Bremsen, Anfahren oder Beschleunigen aus einer bestimmten Geschwindigkeit heraus das Fahrzeuges zusätzlich zum Wanken angeregt wird, besteht hierbei eine erhöhte Kippgefahr. Bei Normalfahrbetrieb ist diese Kippneigung geringer ausgeprägt und nur bei Kurvenfahrt von Bedeutung. Zur Kompensation eines derartigen Anfahr- und Bremsnickens wird eine Wankmomentenverteilung unter Berücksichtigung des Anfahr- und Bremsnickens ermittelt. Als Eingangsgrößen gehen hierbei ein Abgleich der Raddrehzahlen, das Motormoment, der gewählte Getriebegang, der Lenkradwinkel und die aktuelle Ein- bzw. Ausfederung der Vorderachse und der Hinterachse ein.

Um in die Berechnung von Anfahrbeschleunigung und Bremsabstützung Eingang zu finden, muss beim Abgleich der Raddrehzahlen eine Abweichung eines vorgegebenen Raddrehzahlbereiches vorliegen.

Ein derartiges Verfahren ist für normale Straßenfahrzeuge und Geländefahrzeuge geeignet. Selbstverständlich kann dieses Verfahren auch bei Nutzfahrzeugen, Baumaschinen und landwirtschaftlichen Fahrzeugen und deren Hänger eingesetzt werden. Da solche Fahrzeuge oft im Gelände eingesetzt werden, wird mit dem Verfahren ein erheblicher Beitrag zur Betriebssicherheit gewährleistet.

Weitere Einzelheiten der Erfindung ergeben sich aus den nicht zitierten Unteransprüchen und der nachfolgenden Beschreibung in Form mehrerer Flussdiagramme einer schematisch dargestellten Ausführungsform. Die Formelzeichen sind in einer dem Flußdiagramm vorangestellten Formelzeichenliste erläutert.
- Figur 1: Flussdiagramm zur Ermittlung der aktiven Stellkräfte aus der Querbeschleunigung und der Wankmomentenverteilung;
- Figur 2: Flussdiagramm zur Ermittlung der Wankmomentenverteilung unter Verwendung der Giergeschwindigkeit;
- Figur 3: Flussdiagramm zur Ermittlung der aktiven Stellkräfte bei Geländefahrt und Fahrbetrieb längs eines Hanges;
- Figur 4: Flussdiagramm zur Ermittlung der aktiven Stellkräfte bei Anfahrbeschleunigung und Bremsverzögerung.

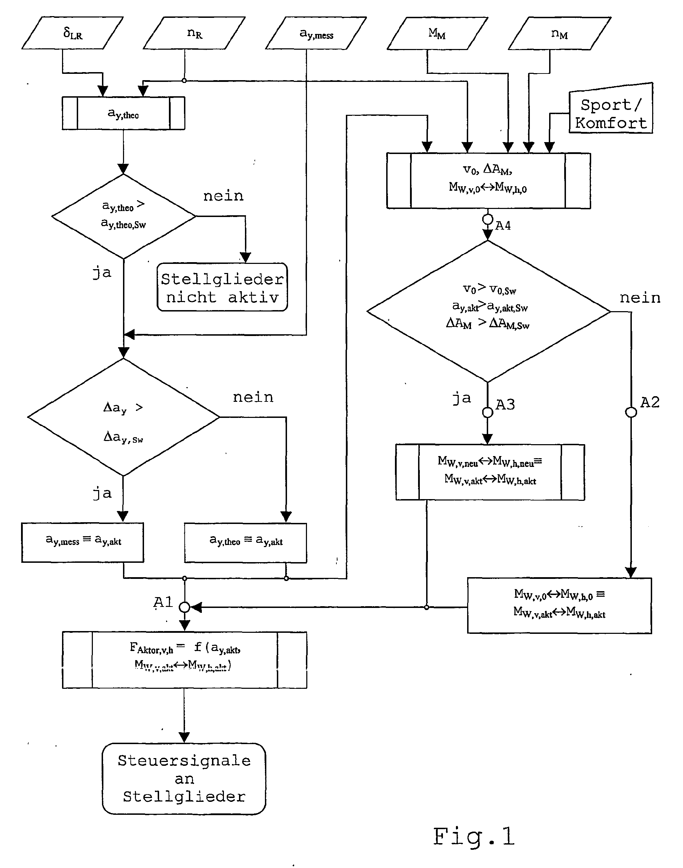

Die Figur 1 zeigt dieses Flußdiagramm. Zur Bestimmung der Querbeschleunigung werden der Lenkradwinkel, die Drehzahlen der Fahrzeugräder und die Querbeschleunigung direkt oder indirekt gemessen.

Der Lenkradwinkel liefert zusammen mit der Lenkgetriebeübersetzung die Fahrtrichtung bzw. den Radius des momentan abgefahrenen Kurvenabschnitts. Anstelle des Lenkradwinkels können - besonders bei Allradlenkungen - auch die Radeinschläge aller gelenkten Räder gemessen werden.

Die zur Berechnung der Querbeschleunigung notwendige Fahrgeschwindigkeit ergibt sich in der Regel u.a. aus der mittleren Fahrgeschwindigkeit der nicht angetriebenen Fahrzeugachse.

Die berechnete Querbeschleunigung eilt der gemessenen voraus und ist nicht so verrauscht wie die gemessene Querbeschleunigung. Sie ist daher besser zur Ansteuerung des Systems geeignet.

Die berechnete Querbeschleunigung wird permanent mit einem Schwellwert verglichen, der alle Kurvenfahrten, einschließlich der theoretischen Geradeausfahrten in Fahrten mit oder ohne Wankausgleich unterteilt. Unterhalb des Schwellwertes, beispielsweise bei Geradeausfahrt, ist das System deaktiviert. Die Stellglieder sind nicht aktiv.

Wird der Schwellwert überschritten, wird die Differenz zwischen der berechneten bzw. theoretischen Querbeschleunigung und der gemessenen berechnet und mit einem Differenzschwellwert verglichen. Beide Werte werden vor dem Vergleichen tiefpaßgefiltert. Ist die Differenz größer als der Differenzschwellwert, so erfolgt eine gleitende Umschaltung auf die gemessene Querbeschleunigung. Letztere wird als aktuelle Querbeschleunigung für die weiteren Berechnungen verwendet. Das hat den Vorteil, daß bei außergewöhnlichen Fahrzuständen Fehlinterpretationen der berechneten Querbeschleunigungen vermieden werden, wie beispielsweise beim Schleudern des Fahrzeugs. Hierbei ergäbe sich durch die unwillkürliche Gegenlenkreaktion des Fahrers ein falscher Querbeschleunigungwert.

Mit Hilfe des Motormoments, der Motordrehzahl, den mittleren Fahrgeschwindigkeiten der Achsen wird zusammen mit der Wahl der Schalterstellung des Komfort/Sportschälters eine Wankmomentenverteilung erstmals errechnet. Entsprechend dieser erstberechneten Wankmomentenverteilung werden die Stellglieder voreingestellt. Gleichzeitig wird die Antriebsmomentenänderung als Funktion der mittleren Fahrgeschwindigkeit der Antriebsachse, des Motormoments und der Motordrehzahl ermittelt.

Die Fahrgeschwindigkeit, die Antriebsmomentenänderung und die aktuelle Querbeschleunigung werden fortlaufend mit entsprechenden vorgegebenen Schwellwerten verglichen. Werden im Ausführungsbeispiel alle drei Schwellwerte überschritten, so werden entsprechend der Höhen der Schwellwertüberschreitungen neue Wankmomentenverteilungen errechnet. Ansonsten wird die erstberechnete Wankmomentenverteilung beibehalten.

Aus der aktuellen Wankmomentenverteilung und der aktuellen Querbeschleunigung werden die Stellgliedkräfte ermittelt. Aus den Stellgliedkräften werden Steuersignale generiert, über die - beispielsweise bei hydraulischen Stellgliedern - die Ventile zur Beaufschlagung der Hydromotoren gesteuert oder geregelt werden.

In die Berechnungen der Stellgliedkräfte fließen neben den in Figur 1 dargestellten Eingangsgrößen selbstverständlich alle notwendigen fahrzeug- und stellgliedtypischen Daten ein.

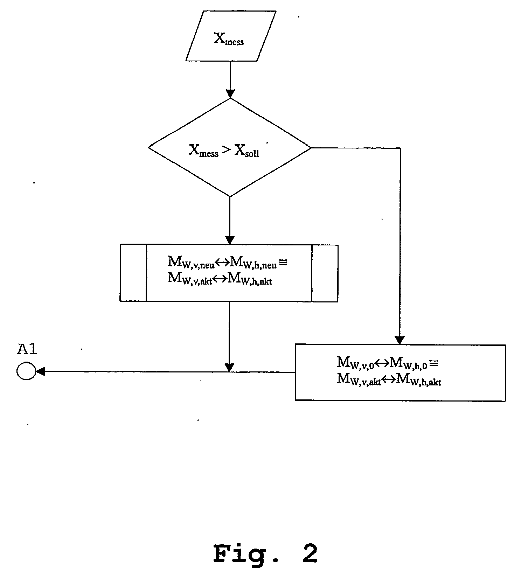

In Figur 2 ist ein Flussdiagramm zur Ermittlung der Wankmomentenverteilung unter Verwendung der Giergeschwindigkeit abgebildet. Die gemessene Giergeschwindigkeit wird permanent mit einer dem jeweiligen Fahrzustand entsprechenden Sollgiergeschwindigkeit verglichen. Wird dieser Sollwert überschritten, wird entsprechend der Sollwertüberschreitung eine neue Wankmomentenverteilung errechnet. Diese Berechnung stützt sich auf die Berechnung der Wankmomentenverteilung unter Berücksichtigung von in Figur 1 verwendeten Parametern wie Fahrgeschwindigkeit, Antriebsmomentenänderung und aktuelle Querbeschleunigung.

Wird der Sollwert nicht überschritten gelten die gleichen Bedingungen wie in Figur 1, wobei die ersterrechnete Wankmomentenverteilung beibehalten wird.

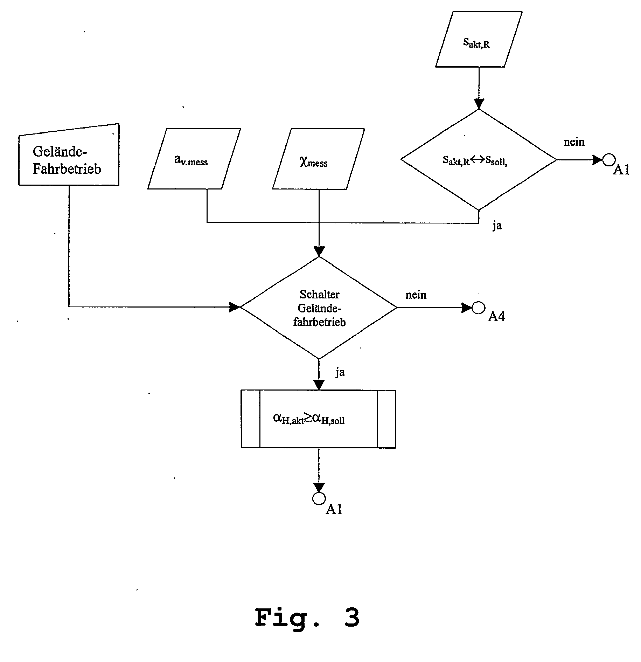

Figur 3 zeigt ein Flussdiagramm zur Ermittlung der aktiven Stellkräfte bei Geländefahrt und Fahrbetrieb längs eines Hanges. Abhängig von der Aktivierung des Schalters für Geländefahrt wird die Berechnung eines Hangwinkels unter der vergleichenden Betrachtung eines aktuellen Hangwinkels und eines Sollhangwinkels ermittelt. Hierzu werden die Parameter der gemessenen Querbeschleunigung, der gemessene Wankwinkel und die aktuellen Federwege der Räder fortlaufend abgefragt.

Die aktuellen Federwege werden beim Fahrbetrieb längs eines Hanges permanent mit entsprechenden Sollfederwegen verglichen und bei positiver und negativer Abweichung mit zur Berechnung integriert.

Tritt keine Abweichung auf, wird der aktuelle Federweg der Räder als weitere Berechnungsgröße zur Ermittlung der Stellkräfte der Stellglieder an der Vorderachse und Hinterachse verwendet. Das entsprechende Signal wird - wie im Flussdiagramm der Figur 1 ersichtlich - an dem Knotenpunkt A1 eingeleitet. Liegt eine Abweichung vor, wird dieser Wert mit den gemessenen Parametern der Querbeschleunigung und des Wänkwinkels zur Berechnung eines aktuellen Hangwinkels verwendet. Weicht dieser aktuelle Hangwinkel entsprechend eines vorgegebenen Hangwinkels ab, wird ein entsprechend dieser Abweichung gewählter Wert zur Ermittlung der Stellkräfte der Stellglieder an den Knotenpunkt A1 der Figur 1 geleitet.

Ist die Abweichung zwischen aktuellem Hangwinkel und vorgegebenen Hangwinkel klein und liegt somit in einem vorgegebenen Bereich, liegt keine wesentliche Hangneigung des Fahrzeuges vor. In diesem Fall verzweigt sich der Signalfluss zum Knotenpunkt A4 der Figur 1, wo über die Fahrgeschwindigkeit, die Antriebsmomentenänderung und der Querbeschleunigung eine Wankmomentenverteilung ermittelt wird.

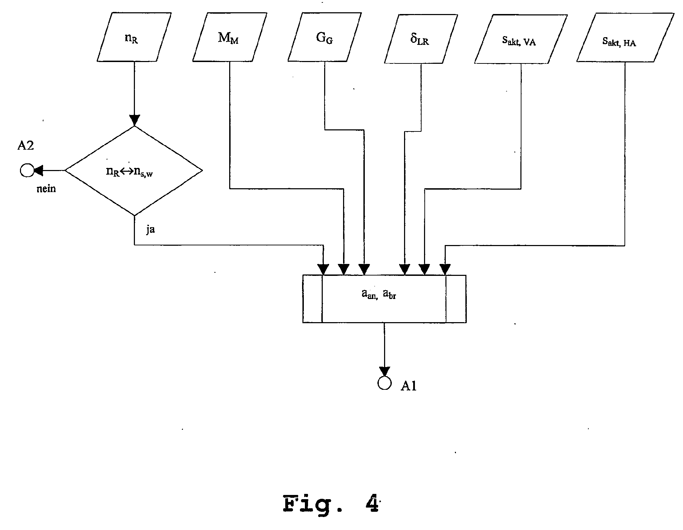

In Figur 4 ist ein Flussdiagramm zur Ermittlung der aktiven Stellkräfte bei Anfahrbeschleunigung und Bremsverzögerung abgebildet. Mit Hilfe der folgenden Eingangsparameter des Motormoments, des Getriebegangs, der Lenkradstellung, der aktuellen Einfederung der Vorderachse und der Hinterachse sowie den Raddrehzahlen wird eine Anfahrbeschleunigung beziehungsweise eine Bremsverzögerung ermittelt.

Die Raddrehzahlen ergeben sich in einer relativen Betrachtung der momentanen Raddrehzahlen zu einem entsprechend vorbestimmten Raddrehzahlenschwellwert. Werden hierbei erhebliche Unterschiede ermittelt, werden diese Werte zur Berechnung der Anfahrbeschleunigung und der Bremsverzögerung verwendet. Ist die Abweichung unwesentlich, wird der Signalfluss zum Knotenpunkt A2 der Figur 1 verzweigt.

Die errechnete Anfahrbeschleunigung oder Bremsverzögerung wird über den Knotenpunkt A1 in der Figur 1 zur Berechnung der aktiven Stellkräfte der Stellglieder verwendet.

### Formelzeichenliste

- a_{y,mess}: Querbeschleunigung, gemessen
- a_{y,theo}: Querbeschleunigung, errechnet
- a_{y,akt}: Querbeschleunigung, aktuell
- a_{y,theo,Sw}: Schwellwert für die theo. Querbeschleunigung
- a_{y,axt,Sw}: Schwellwert für die akt. Querbeschleunigung
- aₐₙ: Anfahrbeschleunigung, positive Beschleunigung
- a_{br}: Bremsverzögerung, negative Beschleunigung

- δ_{LR}: Lenkradwinkel

- Δa_{y}: Differenz von theoretischer und gemessener Querbeschleunigung
- Δa_{y,Sw}: Schwellwert für die Querbeschleunigungsdifferenz

- ΔA_{M}: Antriebsmomentenänderung
- ΔA_{M,Sw}: Schwellwert'für die Antriebsmomentenänderung

- F_{Aktor, v, h}: Stellkraft der Stellglieder an der Vorder- und Hinterachse
- M_{M}: Motormoment

- M_{W,v}: Wankmoment, vorn
- M_{W,h}: Wankmoment, hinten
- M_{W,v,0}↔M_{W,h,0}: Wankmomentenverteilung, erstberechnet
- M_{W,v,neu}↔M_{W,h,neu}: Wankmomentenverteilung, neu
- M_{W,v,akt}↔M_{W,h,akt}: Wankmomentenverteilung, aktuell

- n_{M}: Motordrehzahl
- n_{R}: Drehzahlen der Fahrzeugräder
- n_{Sw}: Schwellwert Raddrehzahl

- v₀: Fahrzeuggeschwindigkeit
- v_{0,Sw}: Schwellwert der Fahrzeuggeschwindigkeit

- Ψₘₑₛₛ: Giergeschwindigkeit, gemessen
- Ψₛₒₗₗ: Soll-Giergeschwindigkeit

- S_{akt,R}: Federweg aktuell am Rad
- s_{soll,R}: Sollfederweg am Rad
- s_{akt,VA}: Einfederung aktuell an der Vorderachse
- s_{axt,VH}: Einfederung aktuell an der Hinterachse

- λ: Radschlupf
- χ: Wankwinkel

- G_{G}: Getriebegang

- α_{H,akt}: Hangwinkel aktuell
- α_{H,soll}: Hangwinkel soll

## Patentansprüche

1. Verfahren zur Beeinflussung des Wankverhaltens in Kraftfahrzeugen mit mindestens drei Rädern,
- wobei zwischen den auf die Räder wirkenden Stabilisatoren und dem Fahrzeugaufbau oder zwischen den Stabilisatorabschnitten zweier Räder einer Achse jeweils mindestens ein Stellglied angeordnet ist,
- wobei am Kraftfahrzeug der Lenkradwinkel (δ_{LR}), die Fahrgeschwindigkeit (v₀), die Fahrzeugquerbeschleunigung (a_{yr}) und am Antriebsmotor mindestens die Motordrehzahl (n_{M}) gemessen wird,
- wobei aus dem Lenkradwinkel (δ_{LR}) und der Fahrgeschwindigkeit (v₀) die theoretische Fahrzeugquerbeschleunigung (a_{y,theo}) berechnet wird,
- wobei aus der gemessenen (a_{y,mess}) oder der berechneten Querbeschleunigung (a_{y,theo}), der Motordrehzahl (n_{M}) und einer der Gaspedalstellung proportionalen Größe eine Wankmomentenverteilung (M_{W,v} ↔ M_{W,h}) errechnet wird,
- wobei aus den Daten der Querbeschleunigung (a_{y,mess}, a_{y,theo}) und der Wankmomentenverteilung (M_{W,v} ↔ M_{W,h}) die Stellgliedkräfte ermittelt werden,
- wobei auf der Basis der Daten der jeweiligen Stellgliedkräfte (Fₐₖₜₒᵣ) die Energiezufuhr zu den Stellgliedern gesteuert wird,
- wobei mindestens an zwei Rädern einer Achse die Raddrehzahlen (n_{R}) gemessen werden und aus den Raddrehzahlen (n_{R}) die für die Berechnung der Querbeschleunigung (a_{y,theo}) notwendige Fahrgeschwindigkeit (v₀) berechnet wird,
- wobei am Antriebsmotor das Motormoment (M_{M}) gemessen oder aus motortypischen Meßdaten und/oder Kennfeldern ermittelt wird,
- wobei die theoretische Querbeschleunigung (a_{y,theo}) mit einem Schwellwert (a_{y,theo,Sw}) verglichen wird, wobei bis zum Erreichen des Schwellwertes (a_{y,theo,Sw}) die Stellglieder nicht aktiv sind, während bei einem Überschreiten des Schwellwertes (a_{y,theo,Sw}) die Differenz (Δa_{y}) zwischen der theoretischen (a_{y,theo}) und der gemessenen Querbeschleunigung (a_{y,mess}) ermittelt wird,
- wobei die Differenz (Δa_{y}) mit einem Differenzschwellwert (Δa_{y,Sw}) verglichen wird, wobei bis zum Erreichen des Differenzschwellwertes (Δa_{y,Sw}) die berechnete Querbeschleunigung (a_{y,theo}) als aktuelle Querbeschleunigung (a_{y,akt}) verwendet wird, während bei einem Überschreiten des Differenzschwellwertes (Δa_{y,Sw}) die gemessene Querbeschleunigung (a_{y,mess}) als aktuelle Querbeschleunigung (a_{y,akt}) definiert wird,
- wobei für einen vorgegebenen, regulären Fahrzustandsbereich in Abhängigkeit von den Drehzahlen (n_{R}) der Fahrzeugräder oder der Radpaare einzelner Achsen, der aktuellen Querbeschleunigung (a_{y,akt}) und der Änderung (ΔA_{M}) des Antriebsmoments eine Wankmomentenverteilung (M_{W,v,0} ↔ M_{W,h,0}) ermittelt wird,
- wobei die Drehzahlen (n_{R}) der Achsen oder Räder, die aktuelle Querbeschleunigung (a_{y,akt}) und die Antriebsmomentenänderung (ΔA_{M}) jeweils mit entsprechenden Schwellwerten (v_{0,Sw}, a_{y,akt,Sw}, ΔA_{M,Sw}) verglichen werden, wobei bis zum Erreichen der Schwellwerte (v_{0,Sw}, a_{y,akt,Sw}, ΔA_{M,Sw}) die erstberechnete Wankmomentenverteilung (M_{W,v,0} ↔ M_{W,h,0}) als aktuelle Wankmomentenverteilung (M_{W,v,akt} ↔ M_{W,h,akt}) verwendet wird, während beim Überschreiten von mindestens zwei der genannten Schwellwerte (v_{0,Sw}, a_{y,akt,Sw} , ΔA_{M,Sw}) eine neue, aktuelle Wankmomentenverteilung (M_{W,v,neu} ↔ M_{W,h,neu} ≡ M_{W,v,akt} ↔ M_{W,h,akt}) errechnet wird, und
- wobei die Stellkräfte (F_{aktor,v,h}) der Stellglieder als Funktionen der aktuellen Querbeschleunigung (a_{y,akt}) und der aktuellen Wankmomentenverteilung (M_{W,v,akt} ↔ M _{W,h,akt}) errechnet werden,
**dadurch gekennzeichnet,**
- **dass** aus den Drehzahlen (n_{R}) der Achsen oder Räder, aus dem Motormoment (M_{M}), aus dem Getriebegang (G_{G}), aus den aktuellen Einfederungen an Vorder- und Hinterachse (s_{akt,VA}, s_{akt,HA}), und aus dem Lenkradwinkel (δ_{LR}) eine Anfahrbeschleunigung (aₐₙ) oder eine Bremsverzögerung (a_{br}) errechnet wird, und
- **dass** die Stellkräfte (F_{aktor,v,h}) der Stellglieder als Funktionen der Anfahrbeschleunigung (aₐₙ) oder der Bremsverzögerung (a_{br}), der aktuellen Querbeschleunigung (a_{y,akt}) und der aktuellen Wankmomentenverteilung (M_{W,v,akt} ↔ M _{W,h,akt}) errechnet werden.

2. Verfahren nach Anspruch 1,
**dadurch gekennzeichnet,**
**dass** zur Berechnung der Wankmomentenverteilung (M_{W,v,akt} ↔ M_{W,h,akt}) ein manuell betätigbarer Schalter abgefragt wird, der die Wahl zwischen einem Berechnungsmodus für komfortablen oder sportlichen Fahrstil ermöglicht.

3. Verfahren nach Anspruch 1,
**dadurch gekennzeichnet,**
**dass** die Stellglieder Hydromotoren oder hydropneumatische Bauteile sind.

4. Verfahren nach Anspruch 1,
**dadurch gekennzeichnet,**
**dass** die gemessene Giergeschwindigkeit (ψₘₑₛₛ) mit einer Soll-Giergeschwindigkeit (ψₛₒₗₗ) verglichen wird, wobei in Abhängigkeit der Fahrgeschwindigkeit (v₀), der Antriebsmomentenänderung (ΔA_{M}) und der Querbeschleunigung (a_{y,mess}) eine aktuelle Wankmomentenverteilung (M_{W,v,akt} ↔ M_{W,h,akt}) ermittelt wird.

5. Verfahren nach Anspruch 1,
**dadurch gekennzeichnet,**
**dass** mit der Berechnung der aktuellen Wankmomentenverteilung (M_{W,v,akt} ↔ M_{W,h,akt}) aus dem Wankwinkel (χₘₑₛₛ), den aktuellen Radfederwegen (s_{akt,R}), den entsprechenden Radsollfederwegen (s_{soll,R}) und der Querbeschleunigung (a_{y,mess}) ein manuell vom Fahrer betätigbarer Schalter abgefragt wird, der die Wahl zwischen einem Normalfahrbetrieb und einem Geländefahrbetrieb ermöglicht.

## Claims

1. Method for influencing the roll behaviour in motor vehicles with at least three wheels,
- wherein at least one actuator, in each case, is arranged between the stabilisers acting on the wheels and the vehicle body or between the stabiliser sections of two wheels of an axle,
- wherein the steering wheel angle (δ_{LR}), the travelling speed (vₒ) and the vehicle transverse acceleration (a_{yr}) are measured at the motor vehicle and at least the engine speed (n_{M}) is measured at the drive motor,
- wherein the theoretical vehicle transverse acceleration (a_{y,theo}) is calculated from the steering wheel angle (δ_{LR}) and the travelling speed (vₒ),
- wherein a roll momentum distribution (M_{W,v} ↔ M_{W,h}) is calculated from the measured (a_{y,meas}) or the calculated transverse acceleration (a_{y,theo}), the engine speed (n_{M}) and a variable which is proportional to the accelerator pedal position,
- wherein the actuator forces are determined from the data for the transverse acceleration (a_{y,meas}, a_{y,theo}) and the roll momentum distribution (M_{W,v} ↔ M_{W,h}),
- wherein the energy supply to the actuators is controlled on the basis of the data for the respective actuator forces (F_{actuator}),
- wherein the wheel speeds (n_{R}) are measured at least at two wheels of an axle and the travelling speed (vₒ) necessary for the calculation of the transverse acceleration (a_{y,theo}) is calculated from the wheel speeds (n_{R}),
- wherein the engine torque (M_{M}) is measured at the drive motor or determined from measured data typical for the engine and/or from characteristic maps,
- wherein the theoretical transverse acceleration (a_{y,theo}) is compared with a threshold value (a_{y,theo,Sw}), wherein the actuators are not active until the threshold value (a_{y,theo,Sw}) is reached, while in the event of the threshold value (a_{y,theo,Sw}) being exceeded, the difference (Δa_{y}) between the theoretical (a_{y,theo}) and the measured transverse acceleration (a_{y,meas}) is determined,
- wherein the difference (Δa_{y}) is compared with a differential threshold value (Δa_{y,Sw}), wherein the calculated transverse acceleration (a_{y,theo}) is used as the current transverse acceleration (a_{y,cur}) until the differential threshold value (Δa_{y,Sw}) is reached, while in the event of the differential threshold value (Δa_{y,Sw}) being exceeded, the measured transverse acceleration (a_{y,meas}) is defined as the current transverse acceleration (a_{y,cur}),
- wherein a roll momentum distribution (M_{W,v,o} ↔ M_{W.h,o}) is determined for a predetermined, regular travelling state range as a function of the speeds (n_{R}) of the vehicle wheels or the wheel pairs of individual axles, the current transverse acceleration (a_{y,cur}) and the change (ΔÄ_{M}) of the drive moment,
- wherein the speeds (n_{R}) of the axles or wheels, the current transverse acceleration (a_{y,cur}) and the change in the drive torque (ΔÄ_{M}) are compared, in each case, with corresponding threshold values (v_{o,Sw}, a_{y,cur,Sw}, ΔÄ_{M,Sw}), wherein until the threshold values (v_{o,Sw}, a_{y,cur,Sw}, Δ_{M,Sw}) are reached, the roll momentum distribution (M_{W,v,o} ↔ M_{W,h,o}) first calculated is used as the current roll momentum distribution (M_{W,v,cur} ↔ M_{W,h,cur}), while in the event of at least two of said threshold values (v_{o,Sw}, a_{y,cur,Sw}, ΔÄ_{M,Sw}) being exceeded, a new current rolling momentum distribution (M_{W,v,new} ↔ M_{W,h,new} ≡ M_{W,v,cur} ↔ M_{W,h,cur}), is calculated, and
- wherein the actuation forces (F_{actuator,v,h}) of the actuators are calculated as functions of the current transverse acceleration (a_{y,cur}) and the current roll momentum distribution (M_{W,v,cur} ↔ M_{W,h,cur}), **characterised in that**
- a start-up acceleration (aₐₙ) or a braking deceleration (a_{br}) is calculated from the speeds (n_{R}) of the axles or wheels, from the engine torque (M_{M}), from the gear speed (G_{G}), from the current spring compressions at the front and rear axle (s_{cur,VA,} s_{cur,HA}) and a start-up acceleration (aₐₙ) or a braking deceleration (a_{br}) is calculated from the steering wheel angle (δ_{LR}), and
- the actuation forces (F_{actuator,v,h}) of the actuators are calculated as functions of the start-up acceleration (aₐₙ) or the braking deceleration (a_{br}), the current transverse acceleration (a_{y,cur}) and the current roll momentum distribution (M_{W,v,cur} ↔ M_{W,h,cur}).

2. Method according to claim 1, **characterised in that** to calculate the roll momentum distribution (M_{W,v,cur} ↔ M_{W,h,cur}), a manually actuable switch is interrogated, which allows the choice between a calculation mode for a comfortable or sporty driving style.

3. Method according to claim 1, **characterised in that** the actuators are hydraulic motors or hydropneumatic components.

4. Method according to claim 1, **characterised in that** the measured yaw rate (Ψₘₑₐₛ) is compared with a desired yaw rate (Ψ_{desired}), a current roll momentum distribution (M_{W,v,cur} ↔ M_{W,h,cur}) being determined as a function of the travelling speed (vₒ), the change in the drive torque (ΔÄ_{M}) and the transverse acceleration (a_{y,meas}).

5. Method according to claim 1, **characterised in that** a switch that can be manually actuated by the driver and allows selection between a normal driving operation and off-road driving operation is interrogated, with the calculation of the current roll momentum distribution (M_{W,v,cur} ↔ M_{W,h,cur}) from the roll angle (Xₘₑₐₛ) the current wheel spring travel values (s_{cur,R}), the corresponding desired wheel spring travel values (s_{desired,R}) and the transverse acceleration (a_{y,meas}).

## Revendications

1. Procédé pour influencer le comportement au roulis sur des véhicules automobiles comprenant au moins trois roues
- à chaque fois au moins un actionneur est disposé entre les stabilisateurs agissant sur les roues et la carrosserie de véhicule ou entre les parties de stabilisateur de deux roues d'un essieu,
- l'angle du volant (δ_{LR}), la vitesse de marche (vₒ), l'accélération transversale du véhicule (a_{yr}) étant mesurés sur le véhicule et au moins le régime moteur (n_{M}) étant mesuré sur le moteur d'entraînement,
- l'accélération transversale théorique du véhicule (a_{y.theo}) étant calculée à partir de l'angle du volant (δ_{LR}) et de la vitesse de marche (vₒ),
- une répartition du couple de roulis (M_{W,v} ↔ M_{W,h}) étant calculée à partir de l'accélération transversale mesurée (a_{y,mess}) ou de l'accélération transversale calculée (a_{y,theo}), du régime moteur (n_{M}) et d'une grandeur proportionnelle à la position de la pédale d'accélérateur,
- les forces d'actionneur étant calculées à partir des données de l'accélération transversale (a_{y,mess}, a_{y,theo}) et de la répartition du couple de roulis (M_{W,v} ↔ M_{W,h}),
- l'arrivée d'énergie aux actionneurs étant commandée sur la base des données des forces d'actionneur (Fₐₖₜₒᵣ) respectives,
- les régimes de roue (n_{R}) étant mesurés au moins sur deux roues d'un essieu et la vitesse de marche (vₒ) nécessaire pour le calcul de l'accélération transversale (a_{y,theo}) étant calculée à partir des régimes de roue (n_{R}),
- le couple moteur (M_{M}) étant mesuré sur le moteur d'entraînement ou étant calculé à partir de données de mesure caractéristiques du moteur et/ou de diagrammes caractéristiques,
- l'accélération transversale théorique (a_{y,theo}) étant comparée avec une valeur seuil (a_{y,theo,sv}), les actionneurs n'étant pas actifs jusqu'à l'atteinte de la valeur seuil (a_{y,theo,sw}), alors que, lors d'un dépassement de la valeur seuil (a_{y,theo,sw}), la différence (Δa_{y}) entre l'accélération transversale théorique (a_{y,theo}) et l'accélération transversale mesurée (a_{y,mess}) est déterminée,
- la différence (Δa_{y}) étant comparée avec une valeur seuil de différence (Δa_{y,sw}), l'accélération transversale calculée (a_{y,theo}) étant utilisée comme accélération transversale actuelle (a_{y,akt}) jusqu'à l'atteinte de la valeur seuil de différence (Δa_{y,sw}), alors que, lors d'un dépassement de la valeur seuil de différence (Δa_{y,sw}), l'accélération transversale mesurée (a_{y,mess}) est définie comme accélération transversale actuelle (a_{y, akt}),
- une répartition du couple de roulis (M_{w,v,o} ↔ M_{w,h,o}) étant calculée pour une plage d'état de marche, régulière et prédéfinie en fonction des régimes (n_{R}) des roues du véhicule ou des paires de roues d'essieux individuels, de l'accélération transversale actuelle (a_{y,akt}) et de la variation (ΔA_{M}) du couple d'entraînement,
- les régimes (n_{R}) des essieux ou roues, l'accélération transversale actuelle (a_{y,akt}) et la variation du couple d'entraînement (ΔA_{M}) étant comparés respectivement avec des valeurs seuils (v_{o,sv}, a_{y,akt,sw}, ΔA_{w,M,sw}) correspondantes, la première répartition du couple de roulis calculée (M_{w,v,o} ↔ M_{w,h,o}) étant utilisée comme répartition actuelle du couple de roulis (M_{w.v.akt} ↔ M_{w.h,akt}) jusqu'à l'atteinte des valeurs seuils (v_{o,sw}, a_{y,akt,sw}, ΔA_{M,sw}), alors que, lors du dépassement d'au moins deux des valeurs seuils citées (v_{o,sv}, a_{y,akt,sw}, ΔA_{M,sw}), une nouvelle répartition actuelle du couple de roulis (M_{w,v,neu} ↔ M_{w,h,neu} ≡ M_{w.v.akt} ↔ M_{w.h,akt}) est Calculée, et
- les forces de réglage (F_{aktor,v,h}) des actionneurs étant calculées comme fonctions de l'accélération transversale actuelle (a_{y,akt}) et de la répartition actuelle du couple de roulis (M_{w.v.akt} ↔ M_{w.h,akt}),
**caractérisé en ce que**
- une accélération de démarrage (aₐₙ) ou une temporisation de freinage (a_{br}) est calculée à partir des régimes (n_{R}) des essieux ou roues, à partir du couple moteur (M_{M}), à partir de la vitesse de transmission (G_{G}), à partir de débattements actuels du ressort sur l'essieu avant et l'essieu arrière (S_{akt,VA}, S_{akt,HA}) et à partir de l'angle du volant (δ_{LR}), et
- **en ce que** les forces de réglage (F_{aktor,v,h}) des actionneurs sont calculées comme des fonctions de l'accélération de démarrage (aₐₙ) ou de la temporisation de freinage (a_{br}), de l'accélération transversale actuelle (a_{y,akt}) et de la répartition actuelle du couple de roulis (M_{w,v,akt} ↔ M_{w,h,akt}).

2. Procédé selon la revendication 1,
**caractérisé en ce que**,
pour le calcul de la répartition de l'angle de roulis (M_{w,v,akt} ↔ M_{w,h,akt}), on peut interroger un interrupteur pouvant être actionné manuellement qui permet le choix entre un mode de calcul pour un style de conduite confortable ou un style de conduite sportif.

3. Procédé selon la revendication 1,
**caractérisé en ce que**
les actionneurs sont des hydromoteurs ou des composants hydropneumatiques.

4. Procédé selon la revendication 1,
**caractérisé en ce que**
la vitesse de lacet mesurée (ψₘₑₛₛ) est comparée avec une vitesse de lacet théorique (ψₛₒₗₗ), une répartition actuelle du couple de roulis (M_{w,v,akt} ↔ M_{w,h,akt}) étant déterminée en fonction de la vitesse de marche (vₒ), de la variation du couple d'entraînement (ΔA_{M}) et de l'accélération transversale (a_{y,mess}).

5. Procédé selon la revendication 1,
**caractérisé en ce que**,
avec le calcul de la répartition actuelle de l'angle de roulis (M_{w,v,akt} ↔ M_{w,h,akt}) à partir de l'angle de roulis (Xₘₑₛₛ), des courses actuels du ressort de roue (S_{akt,R}), des courses théoriques correspondants du ressort de roue (S_{soll,R}) et de l'accélération transversale (a_{y,mess}), on interroge un interrupteur pouvant être actionné manuellement par le conducteur qui permet le choix entre un mode de marche normal et un mode de marche tout terrain.
